# EUROPEAN PATENT SPECIFICATION

(11) **EP 2 776 767 B1**
(45) Date of publication and mention of the grant of the patent: **13.12.2017**
(21) Application number: 12846969.9
(22) Date of filing: 02.11.2012
(51) Int. Cl.: F25B 30/02, F25B 49/00, F25D 9/00, G05D 23/00

(54) **A FAULT-RESISTANT REFRIGERATOR FOR BIOLOGICAL MATERIALS**
AUSFALLSICHERER KÜHLSCHRANK FÜR BIOLOGISCHE MATERIALIEN
RÉFRIGÉRATEUR RÉSISTANT AUX PANNES POUR MATIÈRES BIOLOGIQUES

(30) Priority: 09.11.2011 NZ 59632311
(43) Date of publication of application: 17.09.2014
(73) Proprietor: Ryall, John Hansen, Clevedon 2585 (NZ)
(72) Inventor: MARSH, Christopher, Charles, Sydney, New South Wales 2077 (AU)
(74) Representative: Chapman, Helga Claire
(86) International application number: PCT/NZ2012/000202
(87) International publication number: WO 2013/070090

(56) References cited:
- EP-A1- 2 159 812
- WO-A1-02/090914
- WO-A2-2004/021742
- CN-Y- 201 302 349
- GB-A- 2 225 847
- NZ-A- 596 323
- US-A- 3 225 559
- US-A- 4 741 170
- US-A1- 2010 275 625
- US-B2- 6 502 411

## Description

### FIELD:

The invention relates to improvements in reliable refrigerators for storing temperature-sensitive materials; for example vaccines especially live vaccines, temperature-sensitive pharmaceuticals including peptides, proteins and antibodies, whole blood (of defined type and related properties), blood derivatives, stem cells, cell cultures, donated organs, and donated cell lines or cultures. In particular the invention relates to refrigerators proofed against loss of temperature control.

### BACKGROUND

The Applicant desires to ensure that a biological product, such as a vaccine, is maintained at a designated temperature or temperature range typically a little above freezing (such as between +2 to +8° Celsius) and is neither allowed to freeze, nor to get too hot. Visible signs of a loss of potency of a vaccine or other product may be absent, which leads to substantial problems if the person or animal receiving the vaccine is in fact not rendered immune. Nor is it desirable that the public receives non-functional vaccines and derives a false sense of security. It is estimated that the cost of failures of vaccine storage refrigerators to the health authorities in New Zealand, a country of around 4.4 million people, is about NZD 2 million per annum. An interruption in a power supply or even a door left open can result in the normally well-regulated internal temperature of a refrigerator moving outside acceptable limits. Physical failure within the switching temperature control of a conventional refrigerator may cause the contents of the refrigerator become spoilt, either by becoming frozen or by becoming too hot, One estimate is that 80% of the failures are of the "became too cold" form. In this, the most likely fault is that the metal contacts of the switch or electromechanical relay providing power to the compressor motor become fused together after repeated use, perhaps as a result of formation of arcs, and locked into an "ON" state. As a result, the compressor runs continuously and the storage space becomes too cold, so that the biological materials within lose their potency. The state of New South Wales (Australia) estimates that about AUD 3.5M per annum is lost through spoilt vaccines. Of that cost, 17% is attributed to physical malfunctions and 40% is as a result of power cuts and loss of cooling properties. There are many other instances where living creatures or valuable items are reliant on a single pair of contacts continuing to close and open reliably. For example, the entire stock of rare land snails saved from a mining operation in New Zealand and held in a chilled space were killed when the chiller inadvertently froze the snails.

Ancillary means for proving the storage history of a given sample, and for transmitting storage conditions to a remote site are also desirable.

Of course, this invention has wider applications than vaccine potency. Factors apart from machine breakdown, including human factors have a part to play. A recently cited example is from Niger, where the peptide oxytocin, for use in preventing post-partum haemorrhage and which must be kept refrigerated, was allowed to heat up and spoil because deliveries could not be made at night and nobody would accept them at that time.

### PRIOR ART

A number of fault-reporting refrigerators are known but none of those have an internal second control device held in reserve. The principal type of monitored process under consideration here is a heat pump; for instance a refrigerator, a freezer, or other controlled climate environment. The well-known audible alarm used in domestic deep freezers places its own sensor within the deep freeze and responds audibly to a thaw within the deep freeze. A number of devices which log the internal temperature of a temperature-controlled space, as sensed by a separate temperature sensor within an internal memory are known as in the patent literature. Devices are known capable of transmitting the internal temperature to a remote site, as an e-mail, as a node in an local area network, or wide-area network, and it is convenient to use a "Uniform Resource Locator" (URL) or web address, and to provide means rendering the device itself with the capability of a web server, so that it can transmit information concerning the process being monitored to a remote site over the World-wide Web. Some known devices are capable of sending e-mails to a pre-determined address. KR 20020006320 to Samsung includes a bidirectional network interface, allowing the temperature settings of a domestic refrigerator supplied from a local area network that is attached to the world-wide web to be remotely adjusted. US 2010/0275625 Lowenstein discloses an intelligent, internet-capable refrigerator which "knows what it holds" using RFID means or the like, but this device lacks any inherent means for overcoming a fault.

Citations supplied by the European Patent Office are as follows:
EP2159812 describes a "double fail-safe overcurrent protection device" in which the compressor itself is protected against carrying a high current sensed indirectly by a heating effect in a series resistor 1B. The circuit shows two current-carrying bimetallic-type switches (2A; 3A) in series, both sharing the thermal environment of the resistor, but not exposed to the environment of the refrigerated space. EP2159812 protects the compressor. The resistive heater in series with the compressor will dissipate enough extra heat to cause at least one of the switches to change state when the compressor is operating incorrectly and draws a higher current. Notably, the switches and the resistive heater are constructed within "a heat-resistant insulation case 1K" isolated from the chamber of the refrigerator apparatus.
US 3225559 illustrates a four-compartment refrigerator apparatus namely compartment 1: hot water; compartment 2: chilled water; compartment 3: cold (refrigerated) compartment, and compartment 4: freezer. Each of compartments 1, 2 and 4 have a bimetallic switch and ancillary powered circuits. But compartment (3) is controlled indirectly only, being physically placed in between controlled compartments 2 and 4.
WO2004/021742 describes an improved thermostat for a water heater, comprising an electric circuit comprised of a series of bimetallic switches in which a second switch is comprised of "moderately different" materials as further defined in the specification, and a second switch serves as a reserve in case of failure of a first switch.
GB 2225847 describes a portable container for frozen (at least -20 deg C) samples, including a display of the current temperature and means to display a thermal history including inadvertent unsafe rises in temperature. A portable refrigerant (such as dry ice) is used.
WO 02/090914 includes a system capable of reporting data including temperature from (for example) a food storage cabinet of a retailer over a network to a remote reader.

### OBJECT

An object of the present application is to provide a fault-resistant refrigerator according to claim 1, more preferably one capable of recording the internal temperature, or at least to provide the public with a useful choice. A further object is to provide ancillary means for proving the storage history of a given object. A yet further object is to provide means for transmitting storage conditions to a remote site. An even further object is to provide remote identification of the contents of a temperature-controlled chamber.

### SUMMARY OF INVENTION

In a first broad aspect the invention in accordance with claim 1 provides a refrigerator having fault-resistant control means for causing a temperature of a storage space of a refrigerator to remain within predetermined safe higher and lower limits for biological materials to be stored within the refrigerator; the refrigerator including a heat pump driven by a supply of electricity in series with a first thermally sensitive electric power switch capable of closing and thereby applying power to said heat pump in order to change the temperature of the storage space in a required direction if the temperature of the storage space rises above a first predetermined higher temperature or is capable of opening and thereby disconnecting the power to said heat pump if the temperature falls below a first predetermined lower temperature, **wherein** a second thermally sensitive electric power switch is placed electrically in series with said first power switch, capable of closing if the temperature rises above a second predetermined higher temperature which temperature is higher than the first predetermined higher temperature and of opening if the temperature falls below a second predetermined lower temperature which temperature is lower than the first predetermined lower temperature, wherein the second predetermined higher temperature is higher than the first predetermined higher temperature and the second predetermined lower temperature is lower than the first predetermined lower temperature in order that the second thermally sensitive electric power switch remains closed wherein the first thermally sensitive electric power switch is operating properly, thereby being preserved for use as a backup for the first thermally sensitive electric power switch, wherein the second and hence the first predetermined upper and lower temperature storage limits are within the predetermined safe upper and lower limits for biological materials to be stored within the refrigerator.

In a first related aspect, the second switch is provided with remote status indicating means capable of indicating whether the second switch is brought into use while the first switch is closed and therefore that servicing of the first switch is required; said remote status indicating means being located at the refrigerator.

Preferably the second switch is provided with external status indicating means capable of indicating whether the second switch is open or closed and the first switch is closed. Optionally action of the second switch will raise an external alarm.

Preferably the control means includes (a) at least one temperature transducer, (b) a controller including a clock, (c) data logging means capable when in use of recording a series of temperature readings made within the storage space and (d) information output means capable when in use of producing temperature information to a person located at the site of the container.

Preferably the control means is provided with temperature recording means capable of recording the temperature inside the refrigerator during a period of time.

Optionally the control means is provided with temperature recording means capable of sensing a temperature within the refrigerator and including local indicator means, so that a nearby person is able to read the temperature data over the period of time.

Preferably the control means is provided with electrical temperature recording means capable of sensing a temperature within the refrigerator the recording means having a remote indicator capability so that a person located at a distance is able to review the temperature data over the period of time.

In a second related aspect, the control means is provided with temperature recording means capable of sensing a temperature within the refrigerator; the control means is connected to a digital network; whether a local area network, a wide-area network or a world-wide network or "Web", and includes refrigerator identification means providing a user of the digital network with an ability to identify and interrogate the or each refrigerator and review the history of time versus temperature data for the identified refrigerator from a distance, thereby indicating whether the first or the second thermally sensitive electric power switch is in operation.

In one variant the control means initiates and makes a connection to a person by means of cellular telephone technology selected from a range including text messaging (sms) and speech synthesis.

In a third related aspect, the control means is provided with printing means capable of printing one or more labels for application to the biological materials that verify that storage conditions within the refrigerator have been maintained within limits.

Optionally certification may be obtained from a distance.

Preferably the control means also includes means capable of collecting and storing pack identification information derived from one or more pack identifiers previously applied to the biological materials and selected from a range including without limitation conventional printed labels, bar codes and radio-frequency identification devices (RFIDs) so that the or each pack of biological materials inserted into the refrigerator may be separately identified and monitored during storage and each label can display the temperature at which the pack has been stored.

### PREFERRED EMBODIMENT

The description of the invention to be provided herein is given purely by way of example and is not to be taken in any way as limiting the scope or extent of the invention.

Throughout this specification unless the text requires otherwise, the word "comprise" and variations such as "comprising" or "comprises" will be understood to imply the inclusion of a stated integer or step or group of integers or steps but not the exclusion of any other integer or step or group of integers or steps.

### DRAWINGS

- Fig 1A:: A schematic diagram of the fault-resistant refrigerator.

- Fig 1B:: A schematic diagram of the fault-resistant refrigerator or cold container including an indicator to show if the second switch has been activated (opened).
- Fig 2:: A schematic diagram of an existing refrigerator including a device converting it into a fault-resistant refrigerator or cold container with reporting and communications means.
- Fig 3 as Fig 3(a) and Fig 3(b):: A split image with 3(a) as the earlier part of a graphical report showing data received from a remote, fault-resistant refrigerator.

### EXAMPLE 1

This Example describes the invention used specifically in conjunction with a refrigerator used to hold biological material that would be destroyed if it became frozen. It is known that a conventional refrigerator thermostat device repeatedly switches a compressor motor power supply on or off depending on a temperature sensed by the thermostat. While the power is applied the space inside the refrigerator is actively made colder. Conventional thermostat switches include metallic contacts that are electrically closed unless a sensed temperature about the sensing means is lower than either a predetermined or an adjustable amount. This aspect of the invention overcomes the problem that if the switch becomes damaged by repeated use such that the contacts fuse together and the switch stays closed and the motor remains on, freezing damage to the biological material being stored will occur. The implications of such damage have been described under "Background".

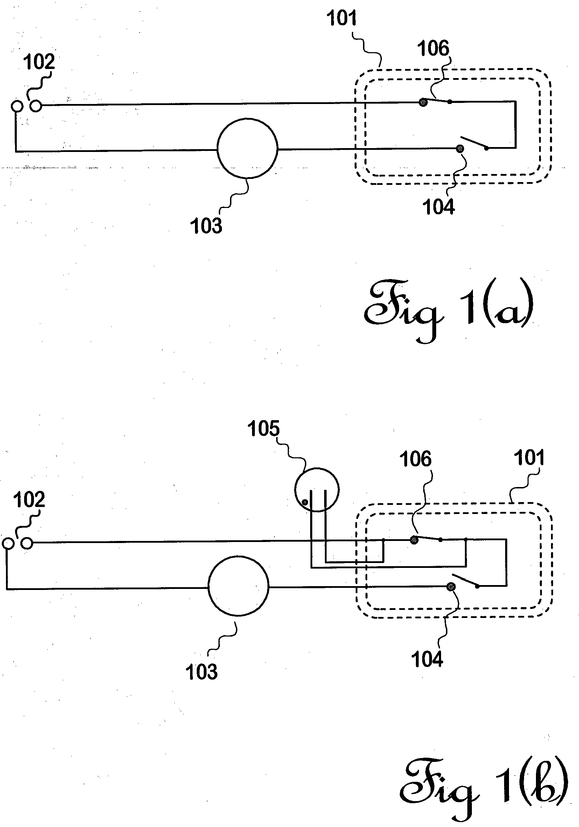

In its simplest form the invention of a fault-resistant refrigerator or cold container as shown in Fig 1 (a) comprises a backup thermostat switch 106 wired in series with the main thermostat switch 104; both switches sensing the temperature of the space 101. Both thermostat switches have the same action; that is, their contacts snap apart and separate so that current cannot pass if the temperature being monitored is too cold. According to the invention, the second temperature sensor 106 or thermostat is adjusted so that its contacts do not open until the internal temperature is about 0.5 to 1° or thereabouts colder than the temperature set by the "main" switch, so that the contacts of the second switch are either not operated at all, or are operated less often during normal use. At the upper end of the range, the second thermostat would operate at a slightly higher temperature than the "main thermostat". In Fig 1 the main switch 104 is shown open, while the backup switch 106 is still closed. In practice the actual difference in temperature settings will preferably allow for the possibility of a thermal time delay between the internal parts of the thermostat switch and the environment that is sensed by the thermostat switch. In Fig la it would not be obvious to a person as to which switch is currently controlling the temperature inside the refrigerator. In an improved form as shown in Fig 1b, an indicator 105 such as an audible alarm or a visible device such as a neon lamp (series resistor of perhaps 155 thousand ohms not shown) is connected across the second, additional switch contacts. The appearance of a significant voltage across those contacts means that the backup switch 106 has opened while the normal switch 104 has not opened. The small current (around 1 mA) passing through the neon lamp and series resistor cannot operate the compressor motor. In other words, if the indicator 105 is on, the invention is currently active. During adjustment, a person can use the sound of the compressor being turned as an indication that both switches are closed, and can set the second thermostat switch 106 so that it opens at a slightly colder temperature than switch 104 (while of course holding the chamber 101 within the limits dictated by the materials to be stored). When in use, light or other signals from the indicator shows that the first thermostat switch is still closed yet the internal temperature has made the second thermostat switch open.

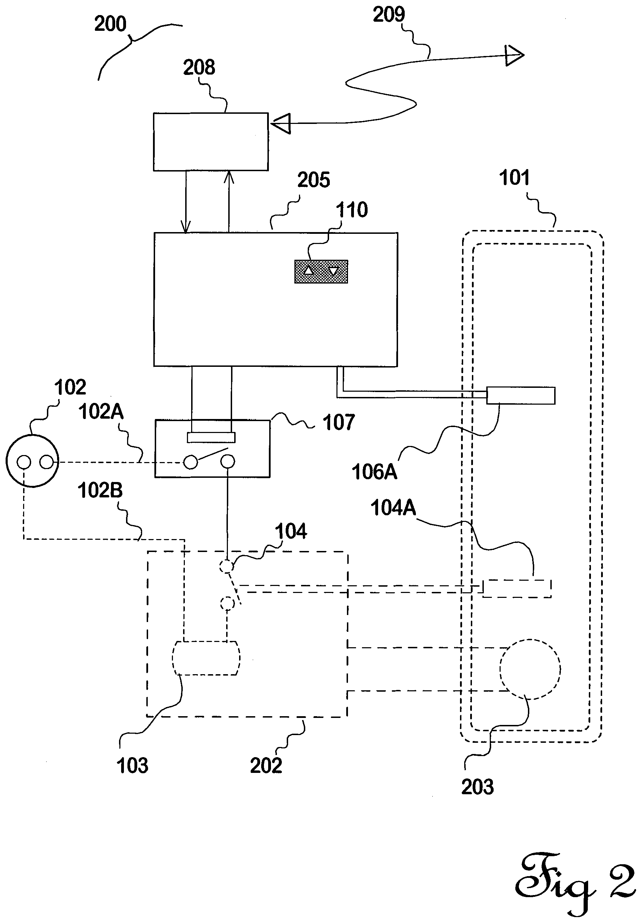

It should be noted that Figs 1a or 1b improvements can be added to an existing refrigerator by electrically coupling the series switch using an "interrupted tap-on mains plug" which is a standard electrical part at least in New Zealand and into which the existing refrigerator plug is inserted, and passing the second thermostat or at least the sensing probe of the second thermostat through a small hole into the interior environment. The device of Fig 2 (for details see below) may be added to an existing refrigerator in the same way.

It will be appreciated that a refrigerator protected according to this invention may include protective means directed to the predetermined colder limit only (as a guard against inadvertent freezing) for the material being stored, or to the upper limit only, or to both the upper and lower limits as defining a range.

### EXAMPLE 2

Figure 2 is a block diagram of the fault-resistant refrigerator or cold container 200, in which temperature records are kept and made available on demand by means of digital electronics and developments in digital communications. This block diagram shows a conversion in which an ordinary refrigerator has been modified in order to become fault-resistant. Existing parts are shown as dashed lines. A refrigerator chamber 101 for holding biological material includes means 203 to pump heat from the chamber such as coils carrying cold refrigerant as part of a closed cycle refrigeration machine, but optionally a Peltier type device or other alternatives. In Figure 2, the existing refrigerator components are shown in dashed lines. The simple backup switch 106 of Fig 1 has become a sensing, switching and recording device 205, preferably though not essentially equipped with Internet or similar communications interface 208 that is connected to a wire or radio link 209. Box 202 includes a compressor 103 as part of a conventional refrigeration apparatus. The wires 102A, 102B carry electrical power connections from a power supply connector 102 to the compressor, through a series switch 104 (a prior-art thermostat switch) that is caused to close, and turn the compressor 103 on, thereby cooling the chamber 101 whenever the prior-art temperature sensor 104A senses a higher temperature than a desired mean temperature, and to open again when the temperature sensor 104 senses a lower temperature. Access doors to the interior of the refrigerator chamber 101, fans for air movement, and storage accessories like shelves are not shown.

This Example is based on a second reserve means 205 for controlling the temperature of the chamber. A second temperature sensor 106A is provided, which in practice would be located alongside sensor 104A (which may be an integral part of a thermostat switch 104) at the site most likely to provide a representative temperature. The second temperature sensor 106A is connected to a controller 205. The invention allows for more than one temperature sensor 106A. Perhaps 4 or 8 separate sensors or temperature transducers might be placed in various sites within the refrigerator, to better describe the internal conditions. Since controller 205 is likely to be microprocessor-based, a suitably calibrated analogue measure of temperature, rather than a less accurate and less consistent electromechanical refrigerator thermostat is preferred. An analogue to digital interface is required for some temperature transducers. Analogue options include a thermistor, a platinum resistance sensor, a thermocouple, a diode, or a device configured as a semiconductor sensor, for instance the analogue devices LM335 (National Semiconductors) or the two-terminal AD590, or devices that produce a digital output such as a pulse-width modulated, daisy-chainable TMP05, an AD7301 or an AD7414. An ADT7461 (Analog Devices, Norwood, MA, USA) has the capability of providing large parts of controller 205 in a single chip since it includes up to two digital outputs to signal that a temperature limit has been exceeded at a remote semiconductor diode sensor.

In this Example, controller 205 may conveniently be based on a microprocessor architecture. A combination of physical components and associated software include:
1. Means to evaluate the output of temperature sensor 106A or sensors - probably by comparing the output against a predetermined minimum temperature threshold.
2. Means to take action if the sensed temperature is lower than the minimum threshold, by opening an in-series normally closed electromechanical relay or equivalent 107 having a sufficient current rating for reliable interruption of the supply current to the existing refrigeration apparatus 103 even during operation. After evaluation, the controller 205 will open the switch 107 which may comprise an electromechanical relay or a solid-state switch such as a "TRIAC", or the like if the evaluated temperature is colder than a threshold, thereby interrupting power to the compressor 103 and preventing a too-cold situation from continuing. As previously described, the combined sensor 104 and associated power switch 104A may after repeated use develop a fault, usually but not always associated with welding together or sticking together of the current-carrying switch contacts of a thermostat. It will be evident to the skilled reader that the controller 205 as configured is independent, and since normally-closed relay 207 is in series with the supply 102A of power to the compressor 102, the controller can over-ride the usual regulating control of the refrigeration device in an autonomous manner should a fault arise. The device needs no commands from any external communications means before it takes action.
3. Means for data logging of the temperature at (for example) five-minute intervals, thereby providing a record of the internal temperature although the preferred time interval may be even shorter than once per second and longer than once per hour. Those skilled in the art will be able to include a "flash" or similar data memory that will hold data of this type, even if the supply of power (not shown) to the memory and to controller 205 is interrupted. Preferably the data storage means at least can operate for several days in the absence of external power - such as by using a backup battery, so that power outages, which can be a major problem in some places, are properly recorded and notified. Ideally, an external backup mains power supply is provided.
4. Means for linking through communications interface 208 to a computer local area network or LAN (whether wired or wireless, as is well known in the relevant art) and the device may be interrogated through its pre-determined unique address, typically an Internet-style unique identifier code such as a uniform resource locator address or URL. In a "master" mode capable of operating as a web server, the controller may instruct interface 208 to initiate sending of an alerting message of any detected problem to a predetermined address such as another stored, specific URL through link 209 and over the Internet, or any equivalent communications medium including without limit SMS or "text" messages over a cellular network in order to alert a person responsible for the contents of the refrigerator of the existence of a fault, or to present logged or immediate temperature data relating to this installation as required. In a "slave" mode, interface 208 merely reports past events whenever it is interrogated over line 209. The interface 208 is also used to store information for examination by a service person during a site visit. For example a log of stored data can be read out upon a numeric display used as the indicator 110, or the service person may bring a reading device such as a lap-top or tablet computer. The device may be constructed so that on receipt of an over-riding command it interrupts the compressor power supply until commanded to re-connect the power, either instead of, or as well as the autonomous monitoring capability of the device.
5. Display means may vary such as with the following: the controller 205 may include a display having at least simple lamp (like neon lamp 105 in Fig 1(b))or other tell-tale indicators 110, the status of which may become latched (i.e. retaining the display of a past fault situation) to show that a major change is occurring or has occurred and to directly show that the temperature as sensed by sensor 106A has either always been within, or has gone outside the predetermined limits (see below). A user of the refrigerator can be alerted directly to possibly compromised contents without that user having to rely on a possibly non-existent or non-functional computer or telephone network 209.
6. A source of power for the controller device 205 is not shown, but may be run from the mains supply, from a battery, or from a battery backup combination perhaps supplemented by solar panels that allows controller 205 to run for a sufficiently long period even if the mains supply is interrupted.

The importance of combining at least some of the functions listed above is related to the over-riding objective of vaccine storage (for this Example), which is to ensure that the vaccine has been stored under the correct conditions at all times before administration. These conditions include a limited allowable range of temperatures according to the specific material under storage such as between about +1 and +4 degrees, or between +2 and +6 degrees. Since a conventional vaccine container lacks visible indication that the correct conditions have continuously been met, there is a need for the invention to be able to verify that the contents have not been damaged by inadvertent temperature exposure. Should there be a problem, the data logs can be read locally or remotely in order to show that preventative action occurred, in order to over-ride as many fault conditions as possible.

In order that the refrigerator chamber 101 is protected against failure of the controller 205 itself, the original simple thermostat switch 104 with 104A is retained and the preferred switch 107 is of a form that is normally closed in the absence of activity within, and a current from, the controller. Suppose that the device has taken action, then as the refrigerated chamber warms up, as sensed by transducer 106, the device 205 will serve as a temperature controller and determine a need to re-activate the heat pump 102 by closing switch 107 until the temperature falls again, and will maintain this backup regulation process until the normal temperature regulation process involving 103 and 104 is restored by a service visit.

For example, if a +2 to +6 degrees range of storage temperatures is imperative, the first or usual thermostat may be set to operate whenever the temperature is outside +3 to +5 degrees. Then, the second or backup thermostat may be set to operate whenever the temperature is outside +2.5 to +5.5 degrees and would not operate during normal temperature regulation.

**Table 1** is a copy of the instantaneous appearance of part of an example computer screen generated by a program carrying out on-line and real-time monitoring, using web addressing, of remote test devices for which the "customer" is "Rollex Test Account".

**Table 1:**

| **Serial No. (URL)** | **Device** | **Time** | **Sensor 1** | **Sensor 2** | **Sensor 3** |
|---|---|---|---|---|---|
| 00:0C:C8:02:64:14 | Fridge 19 Chemo | 08/11/2011 04:26 PM | 3.9 | | |
| 00:0C:C8:02:64:10 | LEC UK Test Device | 08/11/2011 10:38 AM | DNR | | |
| 00:0C:C8:02:5B:8A | NZ Test Fridge 3 PG902 | 08/11/2011 04:25 PM | 5.0 | | |
| 00:0C:C8:02:63:E3 | NZ Test Fridge 5 PG502 | 08/11/2011 04:25 PM | 3.9 | 3.4 | |

The code "D N R" - actually depicted in a yellow warning box - indicates that the device is not responding. That may be due to a number of causes and in practice the person monitoring the screen would take steps to find out the cause, since likely causes would also jeopardize storage conditions. Note that the second device in the list is under test in a distant country (the United Kingdom). It is conceivable that a vaccine distributor or government service could keep track of all shipped vaccines while in storage about a country, or even during shipping if appropriate communications devices were available.

In this Example display the sensor temperature boxes have a green background as displayed if the temperature is within normal limits, and red for temperatures outside limits, either high or low although of course a blue or purple could be adopted for the too-cold warning colours and colour sets other than red/green that are clearly recognisable by a person with colour blindness may be advisable. This table is but a part of a typical working display. This table illustrates the inventors' desire that refrigerator operating parameters can be brought to one place from any site that is connected to the internet.

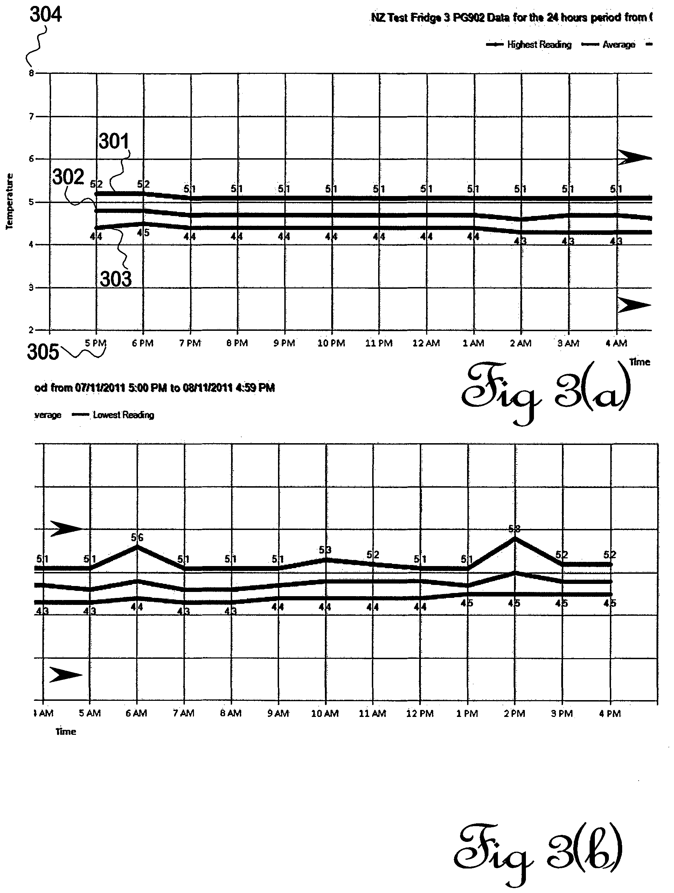

Fig 3 illustrates a 24-hours graphical record. It has been divided into Fig 3(a) for an earlier half, and Fig 3 (b) for the subsequent half, including some overlap as indicated by the solid arrows. Data was read for each hour from 5 pm on one day to 4 pm on the next day - along the time axis 305 - , against temperature - along the vertical temperature axis 304 - in a range between 2 and 8 deg C. It was obtained from one particular refrigerator, NZ Test Fridge 3 PG902 in the Table and stored on the Applicant's web site. This graph is taken from a computer display, and is based on received data that depicts the temperature of a controlled storage space. A temperature resolution of 0.1 degrees Celsius is shown. Fig 3 (a) and (b) shows that ample data for purposes of verification of temperature-sensitive materials such as vaccines or cell masses can be obtained remotely. The two illustrated upward spikes at 6 am and at 2 pm are likely to represent a person opening the refrigerator. No downward spikes likely to destroy biological material by freezing have occurred.

### EXAMPLE 3. Verification or certification of storage quality.

Again with reference to vaccine storage, although that application is by no means limiting as to the scope of the invention, the invention provides means for verifying that a particular container has been properly stored as long as it was held within a fault-resistant refrigerated environment according to the invention. One desirable option is that a person about to use a biological product can obtain immediate proof that the product has been stored inside pre-defined product storage criteria within the refrigerated environment. This might be in the form of a green light or a certifying paper or sticky label, printed at the site at the moment of removal. The invention might instead provide a warning that storage conditions were likely to have reduced the potency of the product.

The controller 205 may also be connected to printing means for printing labels to be applied to items to be removed from the cold storage 101. In one application, the printer may be used to print one or more labels each verifying that storage conditions within the chamber have been maintained within limits over a period. A procedure would involve setting the commencement of a supervised period. The controller would be required to search through data memory from commencement to the present time, in order to confirm that no adverse events have occurred, before a verification label can be printed. This function may be independent from supervision of active cooling. It is then assumed that the items, such as vaccines, stored within have not been exposed to adverse temperatures before storage began, or after storage was completed.

In the above version, any number of labels may be issued in relation to past storage conditions without any specific note being taken of the presence or absence of a particular product or item. That an item was actually present at all times inside the controlled environment is not guaranteed.

Alternatively, there is a need to be able to monitor the presence or absence of specific products; to register the placement or removal of a specific product, and to ensure that a container (which may hold bulk copies of a specific item) cannot be removed from the refrigerated environment even temporarily without the invention learning of the movement. For instance, it would be a breach of conditions if the container was left outside the refrigerated environment for a period long enough to allow for warming up.

Preferably each container is provided with unique machine-readable identification means. This may for example comprise one or more of: (a) an optical bar or 2D matrix code or (b) a magnetically encoded stripe applied on to the container exterior, a machine-readable printed label, or (d) an electronically readable and internal solid-state memory device, including RFID (radio frequency identification device). The machine-readable identification means would be activated each time a container moves past an open door of the refrigerated environment. Preferred methods are totally automatic and do not involve any action on the part of a user, although orienting a container so that a bar scanner can scan a printed bar code may be an acceptable requirement. It is desirable that the invention can differentiate between any one container held within and any other. As a minimum, an induction type resonant tag like those used in shops and libraries may be included in each container to serve as an alerting means.

Temperature logging means as previously described will be capable of allowing the quality of storage to be verified. Particularly in the event of an apparent failure of storage it is useful to be able to retrieve a data history or a log of the storage conditions.

Information storage, processing and delivery means may be located remotely and accessible by means of a link such as but not limited to a LAN or WAN or the world-wide Web, or part or all of the functions may be performed at the site. It is generally more convenient to provide crucial information to a remote supervisor since local equipment may function poorly in event of a power cut for instance. The reader will recall that published similar devices lack the inherent fault-resistant function of the present invention.

An optional decision making means would apply known limits and in a simple form can drive a locally accessible go/no go information delivery means. By this name the inventors refer to at least one of: a display device such as a LCD screen or a coloured light, a sound emitter including an audible tone generator and a speaker, and a printer which may be in a range from one that prints simple sticky labels saying "OK" to one that prints out a detailed log of storage conditions over time. The type of printer may depend on local or national regulations or on convenience. The output may be tied into a nearby local-area network or LAN so that records are kept and the physical printer count is minimized.

Also optionally, any person shifting the container may be required to identify themselves to the machine such as with a personal "swipe card". It must be remembered that the above details apply to a refrigerated space for which the "integrity of refrigeration" is provided by autonomous means using dual thermostats.

### VARIATIONS

It will be appreciated that if the most likely fault is one of the biological contents becoming too hot as a result of failure of the thermostat switch to close, the controller can be reconfigured so that the supplementary heat pump control switch can apply power to the heat pump if required. This type of fault may arise from a number of conditions.

In the case of a passively cooled chamber, such as one reliant on a block of ice, the invention becomes predominantly the management, tracking, and reporting of storage conditions for items stored within. An alarm function is more important than for an actively cooled chamber. This is because there is no capacity to actively control the internal temperature which the invention can activate in an autonomous manner.

It should be noted that the invention is autonomous and can provide its reserve protective function even if not connected through a functional network. Although the relay 107 was described as "normally closed", requiring current to open it, it may be one that is held closed during normal use.

Preferably the invention is configured in order to provide either occasional or regular reports to a person responsible for one or more refrigerators. Such reports may be sent by means well known to those skilled in the art, such as by e-mail or by text messaging (sms) as well as by use of printed letters in the mail. The prevalence of cellular (mobile) telephones means that a text messaging type of communication link such as by the SMS protocol, the preferred default. Or, a canner can download test data (as per Fig 3) on demand.

Connection means that allow easy field modification of existing refrigerator units may involve (for instance) use of IEC mains sockets, plugs, and wiring so that the switch 107 can be inserted in series with an IEC type mains power supply plug, as is known in the art. Alternatively the mains plug known in New Zealand and in Australia as an "interrupted tap-on plug" can be used. Such example connection means allow the unit 205 to draw its own operating power from the connection. The communications lead 209 may comprise the mains power supply wiring itself, although more commonly it would be a wired local network such as an "Ethernet" arrangement using copper, or a wireless network using such as "Bluetooth" or 802.2 protocols.

Although the preferred embodiments are focused on the storage of vaccines, there are other applications particularly in biomedical applications where a temperature that is actively regulated must not go outside limits. These applications include without limit: storage of frozen embryos, frozen cell lines, frozen stem cells, frozen sperm, and reference cultures of microbes at typically the temperature of boiling liquid nitrogen, gene banks of seeds, biochemical reagents that must be stored in controlled conditions, aquariums, incubators for babies, and controlled temperatures for patients who require active control.

Preferably the heat pump is the well-known device using a refrigerant pumped around a circuit by a compressor in a closed cycle. Alternatively the heat pump is a solid-state heat pump such as a Peltier-effect device, and this form could be adapted for use in transport such as by air, by river boat, or if powered by a solar panel, by porters.

Alternatively the heat pump is a device using evaporation of water as a coolant, and this may be used simultaneously to supplement another kind of heat pump
The invention may also be applied to regulated environments where the modality under regulation is not temperature - it might for instance be humidity or air pressure in an air conditioning apparatus.

### ADVANTAGES

The protective and fault-resistant refrigerator or cold container is a relatively simple device, provided as a guard or protector of materials susceptible to destruction if the temperature in which they are stored is not within predetermined limits. The device is connected so that at least the most frequently occurring fault may be avoided. Notification that in fact the reserve thermostat is active is easily arranged.

The preset limits for temperature excursions may be made narrower than those available for conventional refrigerators.

In the biologicals applications area, the data logging facility provides verification that the temperature of the monitored space has stayed within limits.

Although several preferred examples as described above have been disclosed for illustrative purposes, those skilled in the art will appreciate that various modifications, additions, and substitutions are possible without departing from the scope of the invention as set forth in the following claims.

## Claims

1. A refrigerator (200) including a cold storage space or refrigerated chamber (101) and having fault-resistant control means capable, when in use, of maintaining a temperature of the storage space of the refrigerated chamber within between a predetermined safe higher limit and a predetermined safe lower limit for storing biological materials within the storage space; the refrigerator including a heat pump (103) driven by a supply of electricity (102) in series with a first thermally sensitive electric power switch (104) placed in order to sense the temperature of the storage space and capable of closing and thereby applying power to said heat pump in order to cool the temperature of the storage space if the temperature of the storage space rises above a first predetermined higher temperature less than the safe higher limit, and is capable of opening and thereby disconnecting the power to said heat pump if the temperature falls below a first predetermined lower temperature greater than the predermined safe lower limit, **characterised in that**
a. a second thermally sensitive electric power switch (106) is placed electrically in series with said first power switch; both switches sensing the temperature of the space (101) and
b. the second switch is capable of closing if, when in use, the temperature of the storage space rises above a second predetermined higher temperature which temperature is higher than the first predetermined higher temperature and of opening if, when in use, the temperature of the storage space falls below a second predetermined lower temperature which temperature is lower than the first predetermined lower temperature yet remains within the predetermined safe lower limit.
c. the second switch (106) remains closed unless the first switch (104) fails to open at the first predetermined lower temperature
d. so that, when in use, the thermal environment of the cold storage space or refrigerated chamber (101) is maintained between the predetermined safe upper and lower limits for biological materials to be stored.

2. A refrigerator as claimed in claim 1 **characterised in that** the second switch is provided with remote status indicating means capable of indicating whether the second switch is brought into use while the first switch is closed and therefore that servicing of the first switch is required; said remote status indicating means being located at the refrigerator.

3. A refrigerator as claimed in claim 1, **characterised in that** the control means is provided with temperature recording means capable of recording the temperature inside the refrigerator during a period of time.

4. A refrigerator as claimed in claim 3, **characterised in that** the control means is provided with temperature recording means capable of sensing a temperature within the refrigerator and including local indicator means, so that a nearby person is able to read the temperature data over the period of time.

5. A refrigerator as claimed in claim 4, **characterised in that** the control means is provided with temperature recording means capable of sensing a temperature within the refrigerator; the control means is connected to a digital network and includes refrigerator identification means providing a user of the digital network with an ability to identify and interrogate the or each refrigerator and review the history of time versus temperature data for the identified refrigerator from a distance, thereby indicating whether the first or the second thermally sensitive electric power switch is in operation.

6. A refrigerator as claimed in claim 4, **characterised in that** the control means initiates a connection to a person or destination by means of cellular telephone technology selected from a range including text messaging (sms) and speech synthesis.

7. A refrigerator as claimed in claim 4, **characterised in that** the control means is provided with printing means capable of printing one or more labels for application to the biological materials that verify that storage conditions within the refrigerator have been maintained within limits.

8. A refrigerator as claimed in claim 7, **characterised in that** the control means also includes means capable of collecting and storing pack identification information derived from one or more pack identifiers previously applied to the biological materials and selected from a range including without limitation conventional printed labels, bar codes and radio-frequency identification devices (RFIDs) so that the or each pack of biological materials inserted into the refrigerator may be separately identified and monitored during storage and each label can display the temperature at which the pack has been stored.

## Patentansprüche

1. Kühlschrank (200), der einen Kältespeicherraum oder eine gekühlte Kammer (101) einbezieht und ausfallsichere Steuerungsmittel aufweist, die, wenn in Gebrauch, in der Lage sind, eine Temperatur des Speicherraums der gekühlten Kammer innerhalb zwischen einer vorbestimmten sicheren höheren Grenze und einer vorbestimmten sicheren unteren Grenze zur Speicherung biologischer Materialien innerhalb des Speicherraums beizubehalten; wobei der Kühlschrank eine Wärmepumpe (103) einschließt, die von einer Stromversorgung (102) in Reihe mit einem ersten thermisch empfindlichen Stromschalter (104) angetrieben wird, der zum Fühlen der Temperatur des Speicherraums platziert ist und fähig ist sich zu schließen und dadurch Strom auf die Wärmepumpe anzuwenden, um die Temperatur des Speicherraums zu kühlen, wenn die Temperatur des Speicherraums über eine vorbestimmte höhere Temperatur ansteigt, die geringer als die sichere höhere Temperatur ist, und in der Lage ist, sich zu öffnen und dadurch den Strom zur Wärmepumpe zu trennen, wenn die Temperatur unter eine erste vorbestimmte untere Temperatur fällt, die größer als die vorbestimmte sichere untere Grenze ist, **dadurch gekennzeichnet, dass**
a. ein zweiter thermisch empfindlicher Stromschalter (106) elektrisch in Reihe mit dem ersten Stromschalter platziert ist; wobei beide Schalter die Temperatur des Raumes (101) fühlen und
b. der zweite Schalter in der Lage ist, sich zu schließen, falls, wenn in Gebrauch, die Temperatur des Speicherraums über eine zweite vorbestimmte höhere Temperatur ansteigt, welche Temperatur höher als die erste vorbestimmte höhere Temperatur ist und sich zu öffnen, falls, in Gebrauch, die Temperatur des Speicherraums unter eine zweite vorbestimmte untere Temperatur abfällt, welche Temperatur niedriger als die erste vorbestimmte untere Temperatur ist, dennoch innerhalb der vorbestimmten sicheren unteren Grenze bleibt.
c. der zweite Schalter (106) geschlossen bleibt, außer der erste Schalter (104) versagt, sich bei der ersten vorbestimmten unteren Temperatur zu öffnen
d. sodass, wenn in Gebrauch, die thermische Umgebung des Kühlspeicherraums oder der gekühlten Kammer (101) zwischen den vorbestimmten sicheren oberen und unteren Grenzen für zu speichernde biologische Materialien beibehalten wird.

2. Kühlschrank wie in Anspruch 1 beansprucht, **dadurch gekennzeichnet, dass** der zweite Schalter mit fernen Statusanzeigemitteln versehen ist, die anzeigen können, ob der zweite Schalter in Gebrauch gebracht wird, während der erste Schalter geschlossen ist, und daher Wartung des ersten Schalters erforderlich ist; wobei sich die fernen Statusanzeigemittel am Kühlschrank befinden.

3. Kühlschrank wie in Anspruch 1 beansprucht, **dadurch gekennzeichnet, dass** das Steuerungsmittel mit Mitteln zur Temperaturaufzeichnung versehen ist, welche die Temperatur im Innern des Kühlschrank während einer Zeitperiode aufzeichnen können.

4. Kühlschrank wie in Anspruch 3 beansprucht, **dadurch gekennzeichnet, dass** das Steuerungsmittel mit Mitteln zur Temperaturaufzeichnung versehen ist, die eine Temperatur innerhalb des Kühlschranks fühlen können und lokale Anzeigemittel einschließen, sodass eine in der Nähe befindliche Person die Temperaturdaten über die Zeitperiode lesen kann.

5. Kühlschrank wie in Anspruch 4 beansprucht, **dadurch gekennzeichnet, dass** das Steuerungsmittel mit Mitteln zur Temperaturaufzeichnung versehen ist, die eine Temperatur innerhalb des Kühlschranks fühlen können; das Regelungsmittel mit einem digitalen Netzwerk verbunden ist und Kühlschrankidentifikationsmittel einschließt, die einem Benutzer des digitalen Netzwerks mit einer Fähigkeit versehen, den oder jeden Kühlschrank zu identifizieren und abzufragen und die Historie von Zeit- versus Temperaturdaten für den identifizierten Kühlschrank aus einer Entfernung zu überprüfen, dadurch anzeigend, ob sich der erste oder der zweite thermisch empfindliche Stromschalter in Betrieb befindet.

6. Kühlschrank wie in Anspruch 4 beansprucht, **dadurch gekennzeichnet, dass** das Steuerungsmittel eine Verbindung mit einer Person oder einem Bestimmungsort mittels Mobiltelefontechnologie anzeigt, die aus einem Bereich selektiert wird, der Textnachrichten (SMS) und Sprachsynthese einschließt.

7. Kühlschrank wie in Anspruch 4 beansprucht, **dadurch gekennzeichnet, dass** das Steuerungsmittel mit Druckmitteln versehen ist, die eine oder mehrere Etiketten zur Anbringung an die biologischen Materialien drucken können, die verifizieren, dass Speicherbedingungen innerhalb des Kühlschranks innerhalb Grenzen beibehalten worden sind.

8. Kühlschrank wie in Anspruch 7 beansprucht, **dadurch gekennzeichnet, dass** das Steuerungsmittel außerdem Mittel einschließt, die in der Lage sind, Packungs-Identifikationsinformation zu sammeln und zu speichern, die von einem oder mehreren Packungs-Bezeichnern hergeleitet ist, die vormals auf die biologischen Materialien angewandt wurden und aus einem Bereich selektiert sind, der ohne Begrenzung konventionell gedruckte Etiketten, Strichcode und Radiofrequenz-Identifikationsvorrichtungen (RFIDs) einschließt, sodass die oder jede Packung biologischer Materialien, die in den Kühlschrank eingesetzt wurde, während der Speicherung getrennt identifiziert und überwacht werden kann und jedes Etikett die Temperatur anzeigen kann, bei der die Packung gespeichert worden ist.

## Revendications

1. Réfrigérateur (200) incluant un espace de stockage froid ou une chambre réfrigérée (101) et possédant un moyen de contrôle résistant aux pannes capable, lorsqu'il est en utilisation, de maintenir une température de l'espace de stockage de la chambre réfrigérée dans des limites situées entre une limite de sécurité élevée prédéterminée et une limite de sécurité faible prédéterminée pour stocker des matières biologiques au sein de l'espace de stockage ; le réfrigérateur incluant une pompe à chaleur (103) entraînée par une alimentation en électricité (102) en série avec un premier commutateur d'énergie électrique thermiquement sensible (104) placé afin de détecter la température de l'espace de stockage et capable de se fermer et par conséquent d'appliquer l'énergie à ladite pompe à chaleur afin de refroidir la température de l'espace de stockage si la température de l'espace de stockage monte au-delà d'une première température élevée prédéterminée qui est moins que la limite de sécurité supérieure, et capable de s'ouvrir et par conséquent de déconnecter l'énergie se rendant à ladite pompe à chaleur si la température tombe en dessous d'une première température faible prédéterminée qui est plus grande que la limite de sécurité inférieure prédéterminée, **caractérisé en ce que**
a. un deuxième commutateur d'énergie électrique thermiquement sensible (106) est placé électriquement en série avec ledit premier commutateur d'énergie ; les deux commutateurs détectant la température de l'espace (101), et
b. le deuxième commutateur est capable de se fermer si, lorsqu'il est en utilisation, la température de l'espace de stockage monte au-delà d'une deuxième température élevée prédéterminée, cette température étant plus haute que la première température élevée prédéterminée, et de s'ouvrir si, lorsqu'il est en utilisation, la température de l'espace de stockage tombe en dessous d'une deuxième température faible prédéterminée, cette température étant plus petite que la première température faible prédéterminée et restant pourtant au sein de la limite de sécurité inférieure prédéterminée,
c. le deuxième commutateur (106) reste fermé à moins que le premier commutateur (104) ne manque à s'ouvrir à la première température faible prédéterminée,
d. de sorte qu'en utilisation l'environnement thermique de l'espace de stockage froid ou de la chambre réfrigérée (101) soit maintenu entre les limites de sécurité supérieure et inférieure prédéterminées pour des matières biologiques devant être stockées.

2. Réfrigérateur selon la revendication 1 **caractérisé en ce que** le deuxième commutateur est muni d'un moyen d'indication d'état à distance capable d'indiquer si le deuxième commutateur est mis en utilisation pendant que le premier commutateur est fermé et par conséquent qu'une révision du premier commutateur est requise ; ledit moyen d'indication d'état à distance étant localisé au niveau du réfrigérateur.

3. Réfrigérateur selon la revendication 1, **caractérisé en ce que** le moyen de contrôle est muni d'un moyen d'enregistrement de température capable d'enregistrer la température à l'intérieur du réfrigérateur durant un laps de temps.

4. Réfrigérateur selon la revendication 3, **caractérisé en ce que** le moyen de contrôle est muni d'un moyen d'enregistrement de température capable de détecter une température au sein du réfrigérateur et incluant un moyen indicateur local, de sorte qu'une personne se trouvant à proximité soit apte à lire les données de température au cours du laps de temps.

5. Réfrigérateur selon la revendication 4, **caractérisé en ce que** le moyen de contrôle est muni d'un moyen d'enregistrement de température capable de détecter une température au sein du réfrigérateur ; le moyen de contrôle est connecté à un réseau numérique et inclut un moyen d'identification de réfrigérateur lequel procure à un utilisateur du réseau numérique l'aptitude à identifier et interroger ledit ou chaque réfrigérateur et à revoir les données historiques de temps en relation avec la température pour le réfrigérateur identifié à partir d'une certaine distance, ce qui indique par conséquent si le premier ou le deuxième commutateur d'énergie électrique thermiquement sensible est en fonctionnement.

6. Réfrigérateur selon la revendication 4, **caractérisé en ce que** le moyen de contrôle amorce une connexion vers une personne ou une destination au moyen d'une technologie téléphonique cellulaire sélectionnée parmi une gamme incluant l'envoi de messages textes (sms) et la synthèse vocale.

7. Réfrigérateur selon la revendication 4, **caractérisé en ce que** le moyen de contrôle est muni d'un moyen d'impression capable d'imprimer une ou plusieurs étiquettes pour une application sur les matières biologiques qui vérifient que les conditions de stockage au sein du réfrigérateur ont été maintenues au sein des limites.

8. Réfrigérateur selon la revendication 7, **caractérisé en ce que** le moyen de contrôle inclut également un moyen capable de recueillir et de stocker des informations d'identification de lots dérivées à partir d'un ou de plusieurs identifiants de lots appliqués précédemment aux matières biologiques et sélectionnées à partir d'une gamme incluant sans limitation des étiquettes imprimées classiques, des codes à barres et des dispositifs d'identification à radiofréquence (RFID) de sorte que ledit ou chaque lot de matières biologiques inséré dans le réfrigérateur puisse être identifié et surveillé séparément durant le stockage et que chaque étiquette puisse afficher la température à laquelle le lot a été stocké.
